# EUROPEAN PATENT APPLICATION

(11) **EP 2 787 301 A1**
(43) Date of publication of application: **08.10.2014**
(21) Application number: 14163266.1
(22) Date of filing: 02.04.2014
(51) Int. Cl.: F24H 9/20, F24D 19/10

(54) **A Standby Electrical Power Generating System**

(30) Priority: 02.04.2013 GB 201305941
(71) Applicant: Gravestock, David John, Luton, Bedfordshire LU6 2JN (GB)
(72) Inventor: Gravestock, David John, Luton, Bedfordshire LU6 2JN (GB)
(74) Representative: ip21 Ltd

(57) **Abstract**

A standby power generating system for use in conjunction with gas-powered heating systems is disclosed. The system is connected into the gas supply and is activated generating.

Upon a sensor sensing that the electrical supply to the heating system has dropped below a certain preset value. Activation can be carried out manually or automatically.

A converter can convert direct current to alternating current; and can be an inverter which provides a single phase 230 Volt output.

## Description

### Field of the Invention

The invention relates to a standby power generating system for providing electrical power to a heating system, especially a gas-powered heating system, and in particular standby power generating systems which provide electricity to a heating system during an electrical power outage.

### Background to the Invention

The security of electrical supply is questioned in many quarters, as a shortfall in generation capacity is widely predicted in the medium term. This is in addition to power outages caused by events such as sub-station failures or freak weather conditions. On the other hand, for technical reasons, the mains gas supply has to be robust, as a loss of supply is time-consuming and expensive to reinstate. However, although many domestic heating systems are gas fired they are nevertheless dependent on an electrical supply to maintain their function.

The bulk of the electricity demand in modern gas boilers or heaters comes from flue gas fans and the water circulation pumps, along with smaller contributions being made by system elements such as the controls, instrumentation and gas valves etc. Many variables are required in order to arrive at a single indication of energy needs, however, a typical maximum demand can be obtained from available manufacturers' ratings. Typically a maximum figure is based on a large domestic/small commercial system, as it can be argued that users of larger heating systems are more likely to purchase standby systems instead.

Typically, large domestic boilers are rated at a thermal output of 100 kilowatts (kW) and examples such as the Vokera Condexa 100™, the Worcester Bosch GB 162™ and the Baxi Luna HT™ can be considered. The largest electricity demand of these three is the 334W for the Vokera, which also includes sophisticated controls, and so is taken as basis for further analysis.

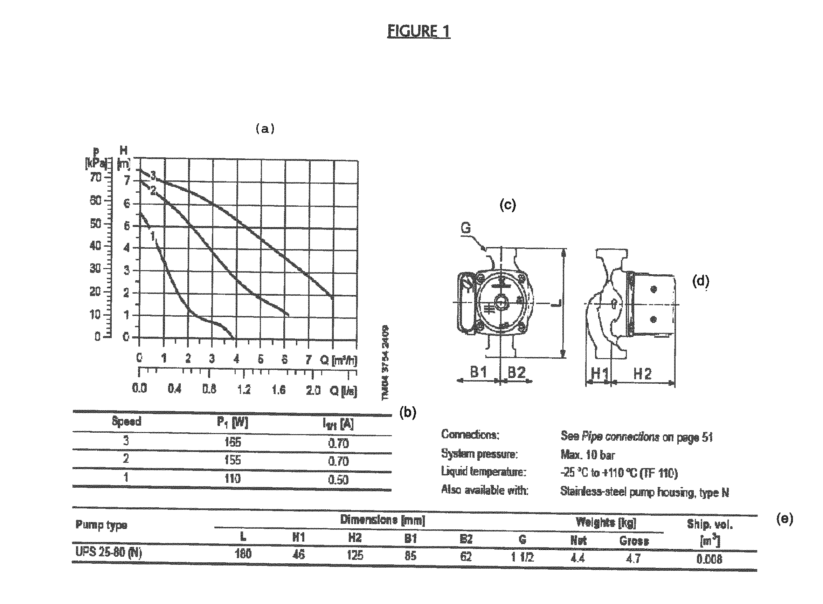

The above boiler figures do not include a pumping energy element, which can be significant. A100kW boiler requires a flow rate of about 1.2 Us (litres per second) for the standard 20° Centigrade temperature rise. A large domestic installation would typically have a flow resistance head of around 2 meters, although this varies considerably between systems. Comparing these figures against manufacturers' pump characteristics, for example a Grundfos UPS 25-80™ has a power requirement of around 165 watts. The pump characteristics for the Grundfos UPS 25-80™ are shown in Figures 1a - e. Furthermore, the Grundfos UPS 25-80™ boiler typically functions on a single phase 230 Volt, 50 Hertz mains supply, and it has been classified with a category 'C' for energy efficiency.

Adding this to the approximate 334 watts for the other components gives an overall figure of around 500W, which is the typical value of a large domestic installation. It should be considered that a small heating installation, for example, with a typical 20kW thermal output boiler such as a Baxi Neta Tec Combi GA™, has a maximum requirement of around 100W for all components. However it should be recognised that certain, especially older, systems may require up to 800W.

Table 1 shows the power needed by both modern and older gas central heating systems. The total power needed by modern and older systems is approximately 500 and 800watts respectively. Exact values will vary between models and so estimates and assumptions have been made. A similar design and power output to the model exemplified herein would be appropriate for older systems as the higher 800watt load is applicable for starting the central heating system. A smaller generator would be suitable for use with modern heating systems as the starting power needed should not exceed 500watts. Using a smaller generator would make for a more compact device and therefore need less space. It is possible to design a more efficient engine and generator that would be more compact and yet create more power however this could become very expensive as more reliable parts would be required.

**Table 1 - Power required by gas central heating system**

| | Modern System Power Requirements (watts) | Older System Power Requirements (watts) |
|---|---|---|
| Boiler System | 50-200 | 200-400 |
| Boiler Startup | 150-300 | 200-350 |
| Thermostat | 1-5 | 1-5 |
| Boiler Control | 2-40 | 40-80 |
| Waterpump | 50-200 | 150-300 |
| Total (start-up) | Maximum 500 | Maximum 750 |
| Total (running) | Maximum 445 | Maximum 785 |

Therefore, it is an object of the described invention to address the above disadvantages and to provide a means of supplying electricity to a gas boiler in the event of the normal electricity supply failing.

### Summary of the Invention

In a broad independent aspect, the invention provides a standby electrical power generating system configured to provide electrical power to a gas-powered heating system, whereby said power generating system comprises an electrical power generating means operably connected to a heating system, and an electrical power sensing means operably connected to a control means, whereby the sensing means senses the electrical output in an electrical supply to a heating system and if the supply falls below a preset threshold, said control means causes the disconnection of the said electrical supply to a heating system and the activation and connection of said electrical power generating means to a heating system.

This configuration is advantageous because when a power outage occurs in an electrical mains supply to a heating system, the electrical power sensing means will detect the outage and will initiate the supply of electrical power to the heating system from a standby electrical power generating means. The switch-over to the standby electrical power means will ensure the heating system is continuously powered and functioning in the event of an electrical power outage.

Preferably, said electrical power generating means is a gas-powered Internal Combustion (IC) engine. This configuration generates an electrical power supply that meets the demands of medium to large sized heating systems.

Further, optionally said electrical power generating means is battery. This is a self-contained unit, which can be located within a unit of the system and generates a DC electrical supply. The DC electrical supply within the battery is drained during use and is then subsequently recharged when not in use.

Preferably, said battery is a lithium polymer battery. This provides a battery which is relatively small in physical size and is therefore easily accommodated with a unit of the system. Furthermore, the composition of this type of battery provides it with a larger capacity for storing electrical energy than other forms of battery.

Preferably, said electrical power generating means is a Free Piston Stirling Engine. This configuration provides the generation of a standby electrical supply suitable for powering a heating system, from the use of a fuel within the heating system to generate heated fluid, which is then subsequently circulated about a heating system.

Optionally, the standby electrical power generating means further comprises a convertor operably connected to said electrical power generating means which is suitable for converting a Direct Current (DC) electrical supply into an Alternating Current (AC) electrical supply. This enables the generation of an AC electrical supply that is very similar to a mains electrical supply, which can be used to power a heating system during a mains electrical supply outage.

Further, optionally said convertor means is an inverter device for providing a single phase 230 Volt AC output. This enables the generation of a conventional single phase AC electrical supply, which is suitable for powering a heating system.

Preferably, said electrical power sensing means is an AC electrical voltage and/or AC electrical current sensing device

As a further aspect of the invention, there is included a boiler comprising an electrical power generating system in accordance with the above features. This configuration provides a boiler which when manufactured incorporates the standby electrical power generating system.

Preferably, retro fitting a standby electrical power generating system, which comprises any of the above features, to a boiler. This configuration enables the standby electrical power generating system to be installed within an existing boiler.

### Brief Description of the Figures

The invention is described with reference to the accompanying drawings, which show by the way of example only one embodiment of a standby power generation system. In the drawings:
Figures 1a to f show the pump characteristics for a known Grundfos UPS 25-80™ boiler;
Figure 2 is an internal combustion engine example;
Figure 3 is a cross-sectional drawing of a Free Piston Stirling Engine Generator; and
Figure 4 is a functional block diagram of a standby power generating system and its interconnections to a heating system.

### Detailed Description of the Invention

In the event of electricity supply outages, perhaps due to general shortfall from the national grid or, as is particularly contemplated in the current invention, a localised failure caused by climatic conditions such as a flood, then it is not simply the lighting, electrically-powered heating and devices such as refrigerators or washing machines which are affected. For example, as indicated above, gas heating systems can also be affected as some components of those systems require an electricity supply. It can be the case therefore that although the mains or local supply bank is still fully functional, a building is left unheated and without hot water.

The present invention as described below, seeks to provide an electricity generating system which can maintain, at least, a gas-powered heating/hot water system until the primary electricity supply is restored.

The electrical power generating system described comprises an electrical power generating means which provides electrical power to a connected gas-powered heating system during a failure of a connected mains electrical supply.

It is regarded that electricity storage/generation would be much simpler from safety, legal and technical aspects if kept below 50V. However, to interface with the 230V AC mains supply, an inverter would be required which provides conversion efficiencies in excess of 80%. This configuration would allow the use of inverters already approved for use with e.g. solar panels so there would be no additional safety or technical issues. There would however need to be some extra control circuitry to ensure that the inverter would only power the desired loads during an outage and that it could not "back feed" to the mains supply.

Amongst the alternatives which can be contemplated to provide the electrical supply, the following can be listed. Firstly, good-quality, commercial, lithium-polymer batteries are known with energy densities of around 135 Watt hour (Wh)/kg equivalent to 230Wh/litre (L). The percentage of this energy actually available from a battery is very variable and unpredictable but 80% would be a typical figure. Taken in conjunction with the inverter efficiency this would mean about 64% of the rated battery capacity could be used to power the 230V side. 64% of 135 Wh/kg means that about 86Wh is actually deliverable from a kilogram of battery (147Wh per litre) via the inverter.

When this figure is translated into the time usefully available, then for a large domestic system of 500W, 5.8 kilogram (kg) (3.4L) of battery would be required for 1 hour supply or 139kg (82L) for 24 hours. Charging and control gear would be on top of this so clearly batteries very quickly cease to be an option as running time increases.

However, from a commercial point of view, for a small system of around 100W maximum demand, it may be worth considering as this would only need 29kg of batteries for a 24 hour back up.

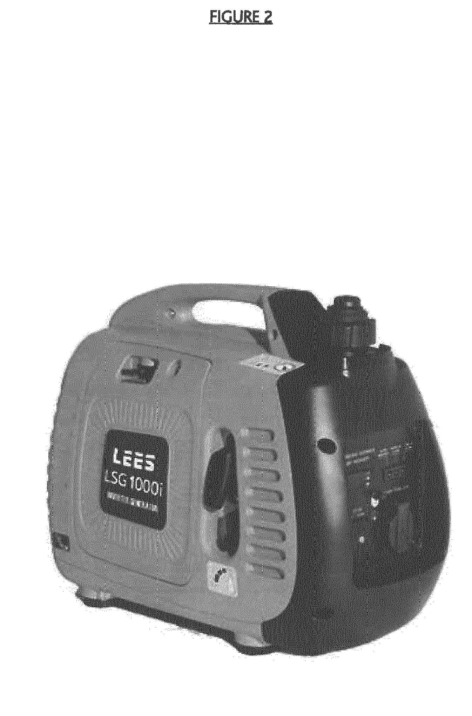

An alternative to a battery is, as exemplified above, an internal combustion engine. This has the advantage of being lightweight and compact. Moreover, fuel supply will often be readily available. For example, the LEES LSG 1000i™ shown in Figure 2 can generate 1000W from a clean running 4-stroke petrol engine, cost less than $200 per unit, weigh 14kg and have a built-in inverter. This is typical of such devices and clearly meets many requirements for the described purpose. Despite the small size, the engine would produce enough electricity to run some small loads as well as the heating system e.g. lighting, TV, laptop etc. To reduce the space required, the generating means can be mounted onto the boiler.

However, the necessary modifications to make an internal combustion engine suitable as a standby generator can add to the cost and complexity. These include conversion to natural gas operation (giving a power reduction of around 15%) with associated control equipment, battery and starter motor for automatic starting upon a power outage, packaging and enclosure to reduce the noise and vibration plus ventilation to remove the heat or possibly even convert to water cooling which could then make use of the heat in the heating system.

One drawback of this system would be the need for regular maintenance (for example lubricating oil change) although this may be required less frequently than service of the boiler itself if the utilisation is low. Nevertheless, a consideration of all factors, such as cost, functioning time, maintenance, an internal combustion engine is a preferred embodiment.

### Example 1

A Clarke IG1000 inverter generator was converted to run on natural gas using a conversion kit. Slight alteration to the original generator case was required, in that a small mounting bracket was attached to the side of the casing to mount the gas regulator following which the generator was assembled.

Once assembled the generator and testing rig were placed in a "fume cupboard" so that a constant suction would remove any exhaust fumes. The system was checked to ensure gas tight operation and any leaks sealed. Testing was carried out with varying loads of 100-800watts of rated power created using 100watt bulbs in series. Amps, voltage and gas usage were recorded for each runtime. Gas was supplied from a 3.9kg propane gas bottle with an initial pressure of 37mbar. The gas passed through a regulator to lower the pressure to enable the gas to be used as an appropriate fuel source. Accordingly there may be slight differences compared with results if run using a natural gas fuel source which is composed of both propane and methane. However it is expected that the change of fuel would only change the results slightly and so is a negligible factor for this test. A total of 30 hours run time was recorded with test runs varying from minutes to hours. Seen below in table 2 are the results for extended sessions run at rated 500watt and 800watt loads. The generator was run for 5 hour periods in the fume cupboard with no problems of overheating. Being run for this extended period of time in a confined space is an indication that with the appropriate venting system for the exhaust fumes the generator could be installed within reasonable distance of a gas boiler system, or even mounted to the gas boiler system. When performing these extended runs oil levels needed to be checked and replenished to ensure adequate lubrication of the engine.

**Table 2 - Test results for 500watt and 800watt runs**

| Rated Load (watts) | Testing time (hours) | Generator Runtime (hours) | Amps (A) | Volts (V) | Generated Power (watts/VA) | Gas Used | Sound Produced (dB) |
|---|---|---|---|---|---|---|---|
| 500 | 1 | 5 | 1.6 | 230.5 | 368.80 | 0.166 | 88 |
| 800 | 1 | 8 | 2.8 | 230.5 | 645.40 | 0.197 | 88 |
| 500 | 2 | 30 | 1.6 | 230.5 | 368.8 | 0.329 | 88 |
| 800 | 2 | 16 | 2.8 | 230.5 | 645.40 | 0.384 | 88 |
| 500 | 5 | 23 | 1.6 | 230.6 | 368.96 | 0.830 | 88 |
| 800 | 5 | 28 | 2.8 | 230.6 | 645.68 | 0.989 | 88 |

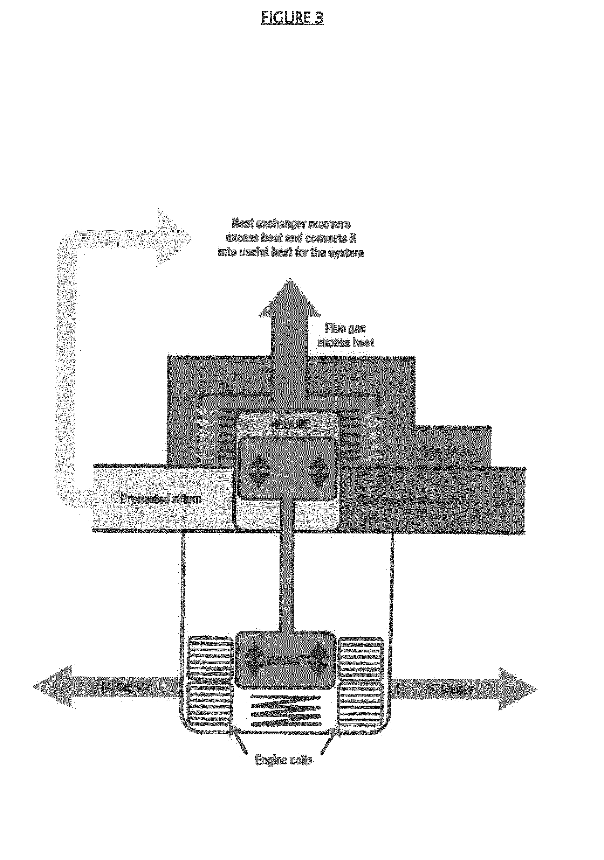

A further alternative is a Stirling Engine Generator. Whilst Stirling Engines are not new, they are not generally mainstream technology. The schematic diagram of the Stirling Engine and generator used in this unit is shown in Figure 3.

It will be noted that as well as providing up to 1 kW of electricity, a Stirling Engine Generator also provides up to 6kW of water heating. So in effect the engine is a small boiler providing heating and domestic hot water. Clearly this is a sophisticated unit and has incurred considerable development costs but the technology is proven and is in volume production.

A manufacturer of such generators is Sunpower Inc." (www.sunpower.com). Their EG-1000 unit produces up to 1000W of electricity from natural gas, with 32% efficiency. The engine is water cooled, weighs 35 kg and measures 270mm diameter x 435mm long.

Clearly both of these generators are well suited to the proposed application as retro-fitted standby generators. Gas is fed in, hot water, electricity and flue gases are the outputs which are all easy to interface in the context of the existing boiler system. The engine is very quiet in operation and produces little vibration. For supply stability on the 230V output, an inverter would be advisable between the generator and the heating system and a small battery would be needed to power up the unit in the event of a power outage. A suitable enclosure capable of housing the device and dealing with the above inputs and outputs would be required but this would be relatively simple. A further advantage is that a free piston engine requires no maintenance.

Figure 3 shows a typical example of a Free-Piston Stirling Engine Generator, whereby a gas inlet provides a combustible gas, which when ignited heats up a helium fluid within an upper chamber. The heated helium fluid then subsequently drives a first piston arranged within the upper chamber so that the first piston reciprocates along a vertical axis within the upper chamber. The first piston then subsequently circulates a heated fluid about a circulatory path which returns to an upper chamber to form a closed return loop. Therefore when heated fluid is circulated about the closed return loop, it radiates heat about the heating system.

The first piston is connected to a lower second piston by a connecting arm, whereby the reciprocating movement of the second piston within a lower chamber is synchronised to the reciprocating movement of the first piston within the upper chamber. The second piston further incorporates a magnet which co-operates with a conductive coil located about the second chamber. When in use therefore, the reciprocating motion of the second piston within the conductive coil generates electrical power, such as Alternating Current (AC). The generated electrical power is then communicated from the generator to the associated heating system. The gas inlet provides both the heated water and electrical power for enabling the operation of an associated heating system through an outage of a mains electrical supply.

A further embodiment of the system uses a Free Piston Stirling Engine, water cooled by the heating system such that the engine heat was also used together with automatic control gear so that the generator would start and stop as required.

Clearly, any combination of the above could also be realised, e.g. Stirling Engine with manual control gear.

All of the above three systems are suitable to provide long-term back-up power for a domestic heating system given the correct context. Batteries are a simple solution where the energy demand is low. The internal combustion engine is preferred and is established technology, cheap and low risk provided the technical solution can be adequately realised. The Stirling Engine offers a good quality solution but at the highest cost and risk.

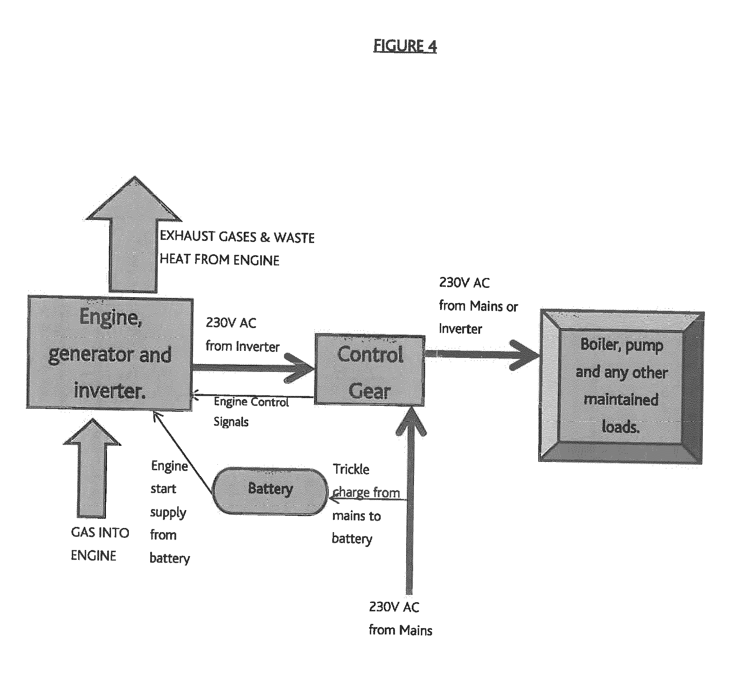

Figure 4 shows the outline connections to the required supplies and systems. In its simplest form, this is a combined gas-fuelled engine, generator and inverter with manual control gear to start the system when the mains electricity switches off and there is no use made of the engine waste heat. The sensing means for sensing a predetermined threshold of electrical output, from an electrical mains supply, is not shown. The sensing means is arranged within the standby system so that it is in communication with the Engine, generator, inverter and/or control gear, via a hardwire and/or wireless connection means. In use, the sensor means monitors the electrical output from an electrical mains supply, to determine if the supply has dropped below a predetermined threshold. If the sensor means detects such a drop in supply, initiation of the start-up of the standby electrical power system takes place and electrical power is generated. Any battery required can be trickle charged whilst mains supply is connected or by electricity generated by the generator.

In use an electrical power cut would normally lead to a heating failure. In an embodiment of the present invention, applicable to a gas-fuelled generator, a transfer box is located close by or mounted to the boiler or heater, the transfer box controlling power supply to the boiler. The transfer box is supplied by electricity from both the mains and the generator and controls the source used to supply the boiler. The transfer box contains a fail-safe cut-off to control the generator and ensure that the boiler is not overloaded.

The generator can be automatically started, as exemplified below, or by means of a manual start-up procedure. Once started, gas is fed into the generator and used to create electricity. The electricity is channelled through an inverter to give a smooth sine wave output, which can power the boiler start-up, controller, thermostat and water pump.

A relay prevents feedback into the mains supply of any extra current generated. When no longer required, the power supply can return to 'mains' source either automatically or manually.

An auto start system would require a transfer switch that detects the absence of current. When mains power is absent the transfer switch will detect this and then switch from the mains supply to the generator system. For fully automatic start a small starter motor is required, power for this can come from a small DC battery charged via the mains power. Signal is received from transfer switch for DC battery to power the starter motor, activating the generator engine. A small auto valve is required to control gas flow, the auto valve to be controlled by transfer switch signal. Upon activation, the valve opens allowing mains gas to flow to generator. The valve is to stay open as long as a signal is received from the transfer switch. Once mains power is reconnected the transfer switch senses current and switches from generator to main current supply. The valve then closes stopping fuel supply to the engine and therefore acting as an auto switch off. The generation is subsequently communicated to the associated heating system. This switch over to the standby electrical power ensures the seamless operation of the associated heating system upon outage of the electrical mains supply.

Therefore, the described invention provides a standby power generating system configured to provide electrical power to a heating system, whereby said power generating system comprises an electrical power generating means operably connected to said heating system, and an electrical power sensing means operably connected to a control means, whereby a sensing means senses the electrical output in an electrical supply to said heating system falls below a predetermined threshold, said control means causes the disconnection of the said electrical supply to said heating system and the connection of said electrical power generating means to said heating system.

In use, the described invention provides a technical effect of enabling a domestic/light commercial heating system to operate during an electrical power outage of an electrical mains supply to the same heating system. The electrical outage may be in the form of supply outages or shortfalls, which are due to freak weather conditions and/or electrical power substation failures.

Therefore, the technical problem addressed by the described invention is to provide electrical power to a gas-powered heating system, during a power outage of an electrical mains supply to the same heating system.

Furthermore, the invention provides a further advantage of providing a means of being able to retaining maintain residents within a heated living space / work space.

Furthermore, the described invention provides a further advantage of preventing the evacuation of any residents within a living/work space because the heating system will still function during an electrical mains supply outage. Otherwise, if the heating system fails the desired temperature for the residents within the living / work space cannot be maintained and the residents will have to be evacuated to another living/work space. This advantage is still obtainable irrespective of the efficiency obtained by the described invention.

In an alternative embodiment of the described invention, the electrical power sensing means is replaced by a manual switching means, which enables the user to manually initiate the described invention during events, such as an electrical mains supply outage.

The system can also include the mains electrical power-sensing means coupled to a safety supply element which prevents the electrical power generating means from feeding power into the heating system when the mains electricity supply is connected and operative sufficient that the combined electrical input would be dangerous. The risk of damage is thereby reduced.

## Claims

1. A standby electrical power generating system configured to provide electrical power to a gas-powered heating system, whereby said power generating system comprises an electrical power generating means operably connected to a heating system, and an electrical power sensing means operably connected to a control means, whereby the sensing means senses the electrical output in an electrical supply to a heating system and if the supply falls below a preset threshold, said control means causes the disconnection of the said electrical supply to a heating system and the activation and connection of said electrical power generating means to a heating system.

2. A power generating system according to Claim 1, wherein the electrical power generating means is a gas-powered Internal Combustion (IC) engine.

3. A power generating system according to Claim 1 or Claim 2, wherein the standby electrical power generating means further comprises a convertor operably connected to said electrical power generating means which converts Direct Current (DC) electrical supply into an Alternating Current (AC) electrical supply.

4. A power generating system according to Claims 1 to 3, wherein activation and connection of the electrical power generating means is automatic upon fall of the supply below a preset threshold.

5. A power generating system according to Claim 3, wherein said convertor means is an inverter device for providing a single phase 230 Volt AC output.

6. A power generating system according to any preceding claim, wherein said electrical power sensing means is an AC electrical voltage and/or AC electrical current sensing device.

7. A power generating system according to any preceding claim, wherein the power-sensing means is coupled to a safety supply element, which prevents the electrical power generating means from feeding power into the heating system when the mains supply is connected and fully operative.

8. A power generating system according to Claim 1, wherein said electrical power generating means is battery.

9. A power generating system according to Claim 8, wherein said battery is a lithium polymer battery.

10. A power generating system according to Claim 1, wherein said electrical power generating means is a Free Piston Stirling Engine.

11. A boiler comprising an electrical power generating system in accordance with Claims 1 to 10.
